# EUROPEAN PATENT SPECIFICATION

(11) **EP 2 524 642 B1**
(45) Date of publication and mention of the grant of the patent: **21.08.2013**
(21) Application number: 11425135.8
(22) Date of filing: 17.05.2011
(51) Int. Cl.: A47L 15/42

(54) **Dishwasher with device for recycling the rinse water**
Geschirrspülmaschine mit einer Vorrichtung zur Wiederverwendung der Spülflotte
Lave-vaisselle avec dispositif de récupération de l'eau de rinçage

(43) Date of publication of application: 21.11.2012
(73) Proprietor: Bonferraro S.p.A., 37060 Bonferraro (VR) (IT)
(72) Inventor: Soffiati, Andrea, 46033 Castel d'Ario MN (IT)
(74) Representative: Concone, Emanuele

(56) References cited:
- EP-A1- 0 607 628
- EP-A1- 0 911 439
- EP-A2- 0 800 785
- DE-A1- 4 009 185
- DE-A1-102007 041 305
- DE-A1-102009 029 115

## Description

The present invention relates to dishwashers, and in particular to a dishwasher provided with a device for recycling the rinse water and/or the wash water.

It is known that in a dishwasher the operating cycle substantially consists of the pre-wash, wash, intermediate rinse, final rinse and drying phases. The initial pre-wash phase is useful to remove the largest residues from the dishes and the water used in said phase is then drained and replaced with clean water for the subsequent wash phase.

In order to reduce the amount of water used in the operating cycle of a dishwasher it is already known to recycle the water of the last rinse of the previous cycle for the pre-wash phase of the following cycle. This recycling is achieved by storing the rinse water in a specific reservoir that is connected to the collecting sump of the wash tank through a relevant hydraulic system with pipes and valves, such that the water can be introduced in the reservoir after the final rinse phase and then returned to the tank at the beginning of the following cycle.

Examples of dishwashers provided with such a rinse water recycling system are found in US 2007-0277854A1 and DE 4243605A1, that disclose hydraulic connecting systems between the storage reservoir and the wash tank in which there is provided a specific valve that opens and closes the access to the reservoir or a two-way valve that directs the rinse water towards the reservoir or towards the drain pipe.

In both types of prior art dishwashers there is in any case provided a single valved passage for the inflow and outflow of the recycled water into and from the storage reservoir. This obviously implies that the water can be loaded in the reservoir only once per cycle, because if the valved passage is re-opened for a further loading the water previously loaded into the reservoir flows out towards the wash tank.

As a consequence, the maximum amount of water that can be loaded in the storage reservoir is equal to the amount present in the wash tank at the end of the last rinse and that the wash pump is able to transfer to the reservoir until the water level becomes so low as to cause cavitation of the pump. This also makes impossible to control precisely the amount of water loaded in the storage reservoir on the basis of the wash pump operating time since cavitation can rise not always at the same moment and to a different extent.

Moreover, the opening/closing time of the valved passage is affected by room temperature since the valve is usually of the type in which a shutter is moved due to the expansion/contraction of wax upon activating a thermoactuator. Therefore it is not even possible to precisely determine how much water flows out of the reservoir during the valve closing phase when the wash pump is already cavitating and is thus stopped.

It should be noted that if one wished to perform a second loading of recycled water in the storage reservoir it would also be possible to have first all the water from the first loading flow out to the wash tank and then re-load all the water. However, such a procedure not only implies an increase in the operating time of the wash pump and in the cycle length, but also makes yet more uncertain the definition of the amount of water actually loaded in the reservoir.

A different arrangement is described in EP 0911439A1 relating to a dishwasher that comprises a reservoir to store recycled water that is loaded into the reservoir by the drain pump through a top inlet to which the water is directed by activating a diverter that closes the drain conduit. The reservoir has a valved upper aperture communicating with the ambient and an outlet communicating with the tub through a siphon having a priming level which is higher than the top inlet. The reservoir is emptied by shortly operating the drain pump with the valve of the upper aperture in its closed state and the diverter in the position in which the inlet is open, so as to create a pressure in the reservoir that pushes the water stored therein to cause it to move upwards along the rising portion of the siphon until the siphon is primed. Though such a machine allows to load water in the reservoir multiple times per cycle, still it does not allow to control precisely the amount of water loaded in the reservoir. Moreover, the reservoir load can only be emptied all together since there is no valved outlet to control the outflow, and due to the siphon outlet some water will always remain at the bottom of the reservoir stagnating there until the next usage.

Therefore the object of the present invention is to provide a dishwasher that performs the rinse water recycling function with a structure which overcomes the above-mentioned drawbacks. This object is achieved by means of a dishwasher provided with a storage reservoir comprising two separate valved passages for the inflow and outflow of the recycled water, as well as an internal partition dividing the reservoir into two portions each of which is provided with one of said valved passages and with a connection to the wash tank that acts as vent and overflow port. Other advantageous features of the present dishwasher are disclosed in the dependent claims.

The main advantage of this dishwasher stems from the fact that the rinse water recycling function can be performed in two successive steps, i.e. loading the water twice in the storage reservoir without this causing the outflow of the water already present therein. In this way, it is possible to exploit also the water of an intermediate phase of the cycle to accumulate in the storage reservoir a greater amount of water to be used for a longer and more accurate pre-wash without increasing the overall water consumption.

A further advantage of the present dishwasher is the higher precision in the amount of recycled water, in that the loading is carried out by operating the wash pump for a time more than enough to fill the reservoir portion to be loaded until the water overflows into the tank. In this way, regardless of the time required for the closure of the valve of the relevant passage, the water contained in said reservoir portion is that corresponding to the capacity up to the overflow port.

Still another advantage of the above-mentioned dishwasher is obtained by dividing the reservoir into two portions preferably of different capacity that provide a greater flexibility in programming the recycling function. In fact, the storage reservoir can be used only for the smaller portion (e.g. 1 lt. of capacity) or only for the larger portion (e.g. 2 lt. of capacity), or for both portions thus combining their capacities (e.g. 3 lt. of total capacity).

These and other advantages and characteristics of the dishwasher according to the present invention will be clear to those skilled in the art from the following detailed description of an embodiment thereof, with reference to the annexed drawings wherein:

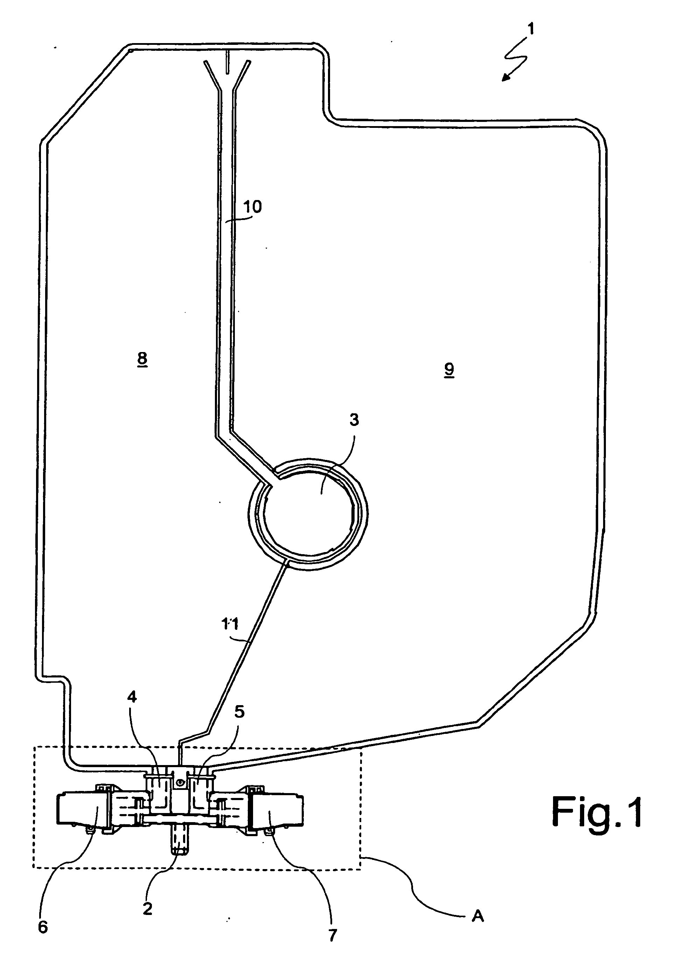

Fig.1 is a diagrammatic front view of the dishwasher storage reservoir, complete with valve group and socket for its connection to the wash pump;
Fig.2 is an enlarged view of detail A of Fig.1 with both valves in the closed position;
Fig.3 is a view similar to Fig.2 with the valve of the smaller portion in the open position;
Fig.4 is a view similar to Fig.2 with the valve of the larger portion in the open position; and
Fig.5 is a view similar to Fig.2 with both valves in the open position.

Referring to said figures, there is seen that a dishwasher according to the present invention is conventionally provided with a storage reservoir 1 that receives the recycled water from the collecting sump through a socket 2 connected by a pipe to a delivery of the wash pump (both not shown). Said reservoir 1 is provided with a collar 3, acting as vent and overflow port, that connects it to the wash tank, as well as with valve means suitable to prevent the water loaded therein from flowing back towards the wash tank.

A first novel aspect of the present invention resides in the fact that reservoir 1 includes two separate inlet/outlet passages 4 and 5, each passage being controlled by a respective valve 6 and 7, which converge downwards into the single socket 2. Each of the two passages 4, 5 is respectively formed in one of the two portions 8, 9 into which reservoir 1 is divided by a vent duct 10, leading to collar 3 from the top of the reservoir, and by a dividing baffle 11 extending from the bottom of the reservoir to collar 3.

A second novel aspect of the present dishwasher resides in the fact that the division of reservoir 1 is achieved with two portions 8, 9 preferably of different capacity, indicatively in a 1:2 ratio.

For manufacturing convenience, duct 10 and collar 3 make part of the internal partition of reservoir 1 and the two portions 8, 9 share the vent and overflow port, but it should be noted that each portion 8, 9 could have its own connection to the wash tank and the partition could consist of a dividing baffle extending from the bottom to the top of reservoir 1.

The simple and effective operation of the present dishwasher is therefore readily understood in the light of the description given above.

It is assumed that one wishes to load into reservoir 1 one liter of water used in the intermediate wash phase and two liters of water used in the final rinse phase, two liters being the maximum loadable amount before the pump starts cavitating, so as to obtain a total load of three liters corresponding to the full water load to be used in the first phase of the following cycle without thus having to use network water.

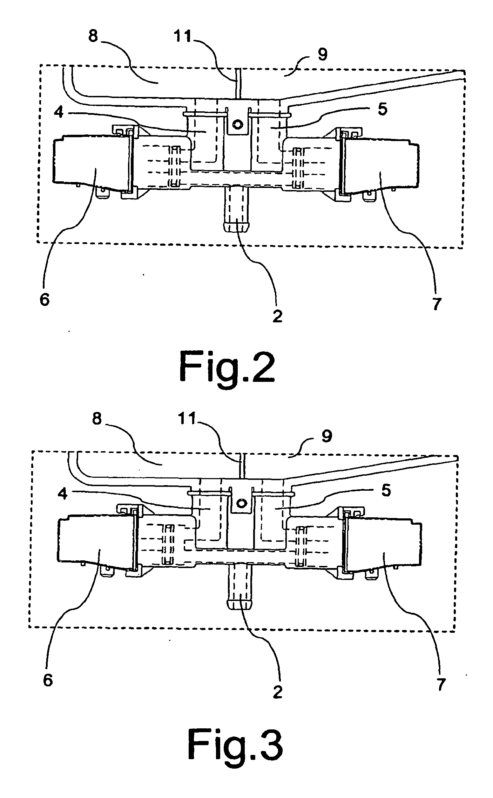

The first liter of water is therefore loaded at the end of the first wash phase, when the wash pump is kept running and simultaneously the thermoactuator of valve 6 controlling passage 4 is activated, whereas valve 7 controlling passage 5 remains closed (Fig.3). As valve 6 opens up the water flow starts filling the smaller portion 8, until it is completely filled and water overflows to the wash tank through duct 10 and collar 3.

After a preset time the thermoactuator of valve 6 is turned off thus causing it to close down, then also the wash pump is turned off while the water remaining in the wash tank is drained from the dishwasher by the drain pump (not shown). As previously mentioned, even if valve 6 takes a time longer than calculated to close down after its thermoactuator is deactivated because it operates at a temperature higher than foreseen which lengthens the wax solidification time, the operating period of the wash pump is such as to guarantee the complete filling of portion 8.

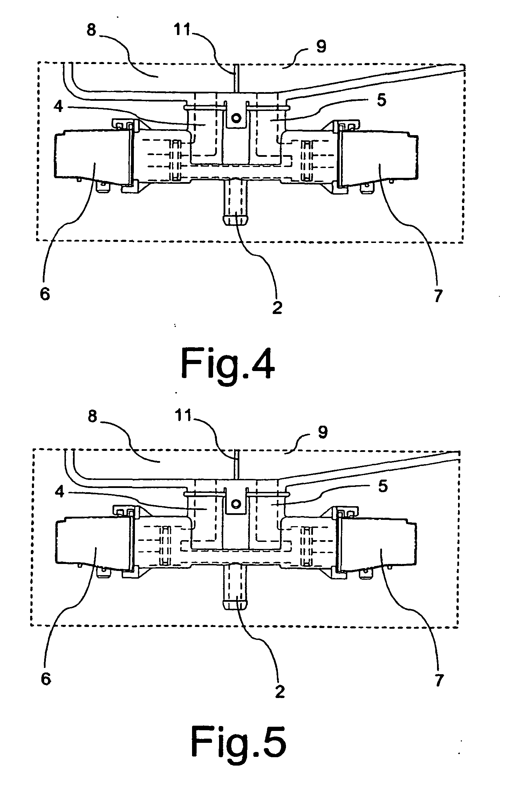

At the end of the wash cycle, after the final rinse, the further two liters of water are loaded in the same way into portion 9 of reservoir 1 by opening valve 7 and keeping valve 6 closed (Fig.4), whereby the first liter of the intermediate load adds up precisely to the two liters of the final load. The water still remaining in the wash tank is then obviously drained by the drain pump and the cycle terminates.

At the beginning of the following cycle, both valves 6 and 7 are opened (Fig.5) so that the entire water load contained in reservoir 1 is transferred by gravity to the wash tank passing through socket 2 and the wash pump. The two valves 6, 7 are then deactivated and, upon their complete closure, the wash pump is activated to proceed with the cycle.

It is clear that the above-described and illustrated embodiment of the dishwasher according to the invention is just an example susceptible of various modifications. In particular, the exact structure and relative position of valves 6, 7 can change somewhat according to specific manufacturing needs, as well as the shape and position of the vent duct 10, of collar 3 and of the dividing baffle 11 as long as a suitable partition of reservoir 1 is achieved.

Similarly, the exact shape and arrangement of reservoir 1 can change according to the required capacity thereof and to the room available between the tank and the external casing, where it is typically located, and it could extend also on multiple sides of the tank.

## Claims

1. Dishwasher comprising a wash tank with a collecting sump at the bottom and a wash pump that draws the water from said collecting sump and sends it through a socket (2) into a storage reservoir (1) provided with valve means suitable to prevent the water from flowing back to said wash tank, **characterized in that** said storage reservoir (1) includes an internal partition dividing the reservoir into two portions (8, 9) each of which is provided with a connection to the wash tank that acts as vent and overflow port and with an inlet/outlet passage (4, 5) through which the water flows into and out of the relevant portion (8, 9) where each of said passages (4, 5) is located, each passage (4, 5) being controlled by a respective valve (6, 7).

2. Dishwasher according to claim 1, **characterized in that** the internal partition divides the reservoir into two portions (8, 9) of different capacity, preferably in a 1:2 ratio.

3. Dishwasher according to claim 1 or 2, **characterized in that** the internal partition of the reservoir (1) is formed by a vent duct (10) leading from the top of the reservoir (1) to a collar (3) connecting it to the wash tank, and by a dividing baffle (11) extending from the bottom of the reservoir (1) to said collar (3).

4. Dishwasher according to the preceding claim, **characterized in that** the two portions (8, 9) share the vent and overflow port formed by the vent duct (10) and the collar (3).

## Patentansprüche

1. Geschirrspüler, umfassend einen Waschtank mit einem Sammelbecken am Boden und einer Waschpumpe, die das Wasser aus dem Sammelbecken absaugt und über einen Anschlussstutzen (2) zu einem Speicherbehälter (1) leitet, welcher mit einem Ventilmittel versehen ist, um das Wasser davon abzuhalten, in den besagten Waschtank zurückzufließen, **dadurch gekennzeichnet, dass** der besagte Speicherbehälter (1) eine interne Unterteilung aufweist, die den Behälter in zwei Bereiche (8, 9) unterteilt, von denen jeder mit einer Verbindung zu dem Waschtank versehen ist, die als Entlüftungs- und Überlaufanschluss wirkt, sowie mit einer Einlass-/Auslass-Passage (4, 5), durch die das Wasser in den relevanten Bereich (8, 9) hinein und aus diesem heraus fließt, wo jede dieser Passagen (4, 5) sich befindet, wobei jede Passage (4, 5) von einem betreffenden Ventil (6, 7) gesteuert wird.

2. Geschirrspüler nach Anspruch 1, **dadurch gekennzeichnet, dass** die interne Unterteilung den Behälter in zwei Bereiche (8, 9) von unterschiedlicher Kapazität unterteilt, vorzugsweise in einem Verhältnis von 1:2.

3. Geschirrspüler nach Anspruch 1 oder 2, **dadurch gekennzeichnet, dass** die interne Unterteilung des Behälters (1) durch eine Entlüftungsleitung (10) gebildet wird, die vom oberen Ende des Behälters (1) zu einem Kragen (3) führt und ihn mit dem Waschtank verbindet, sowie durch ein Unterteilungsblech (11), das sich von dem Boden des Behälters (1) bis zu dem besagten Kragen (3) erstreckt.

4. Geschirrspüler nach einem der vorhergehenden Ansprüche, **dadurch gekennzeichnet, dass** die zwei Bereiche (8, 9) sich den Entlüftungs- und Überlaufanschluss teilen, der durch die Entlüftungsleitung (10) und den Kragen (3) gebildet wird.

## Revendications

1. Lave-vaisselle comprenant une cuve de lavage avec un bassin de collecte au fond et une pompe de lavage qui tire l'eau dudit bassin de collecte et l'envoie par une douille (2) dans un réservoir de stockage (1) prévu avec des moyens de valve appropriés pour empêcher le refoulement de l'eau dans ladite cuve de lavage, **caractérisé en ce que** ledit réservoir de stockage (1) comprend une séparation interne divisant le réservoir en deux parties (8, 9) dont chacune est prévue avec un raccordement à la cuve de lavage qui sert d'évent et d'orifice de trop-plein et avec un passage d'entrée/sortie (4, 5) à travers lequel l'eau s'écoule dans et hors de la partie (8, 9) appropriée, où chacun desdits passage (4, 5) est positionné, chaque passage (4, 5) étant commandé par une valve (6, 7) respective.

2. Lave-vaisselle selon la revendication 1, **caractérisé en ce que** la séparation interne divise le réservoir en deux parties (8, 9) de différente capacité, de préférence selon un rapport de 1:2.

3. Lave-vaisselle selon la revendication 1 ou 2, **caractérisé en ce que** la séparation interne du réservoir (1) est formée par un conduit d'évent (10) allant du sommet du réservoir (1) jusqu'à un collier (3) la raccordant à la cuve de lavage et par un déflecteur de division (11) s'étendant du fond du réservoir (1) jusqu'audit collier (3).

4. Lave-vaisselle selon la revendication précédente, **caractérisé en ce que** les deux parties (8, 9) partagent l'évent et l'orifice de trop-plein formés par le conduit d'évent (10) et le collier (3).
